Europäisches Patentamt

European Patent Office

Office européen des brevets

(19)

(11) Veröffentlichungsnummer: **0 054 918**
**B1**

(12) # EUROPÄISCHE PATENTSCHRIFT

(45) Veröffentlichungstag der Patentschrift:
27.11.85

(21) Anmeldenummer: 81110537.8

(22) Anmeldetag: 17.12.81

(51) Int. Cl.⁴: **E 04 F 17/08**, E 04 G 15/06,
F 16 L 5/02, F 16 L 7/00

(54) **Vorrichtung für die Einführung von Installationsrohren und -leitungen in unterkellerte Gebäude.**

(30) Priorität: 24.12.80 DE 8034605 U

(43) Veröffentlichungstag der Anmeldung:
30.06.82 Patentblatt 82/26

(45) Bekanntmachung des Hinweises auf die Patenterteilung:
27.11.85 Patentblatt 85/48

(84) Benannte Vertragsstaaten:
AT BE CH DE FR GB LI LU NL

(56) Entgegenhaltungen:
**EP - A - 0 016 335**
**CH - A - 412 484**
**DE - A - 1 965 728**
**DE - A - 2 226 374**
**FR - A - 2 391 338**

(73) Patentinhaber: **Ellrott, Egon, Blumenthalstrasse 9,
D-2800 Bremen (DE)**

(72) Erfinder: **Ellrott, Egon, Blumenthalstrasse 9,
D-2800 Bremen (DE)**

(74) Vertreter: **Bolte, Erich, Dipl.-Ing. et al, c/o Meissner &
Bolte Patentanwälte Hollerallee 73, D-2800 Bremen (DE)**

ACTORUM AG

**Beschreibung**

Die Erfindung betrifft eine Vorrichtung für die Durchführung mehrerer Installationsleitungen und -rohre durch eine Aussenmauer in den Keller eines unterkellerten Gebäudes nach dem Oberbegriff des Patentanspruches 1.

Bei Hochbauten, insbesondere bei Wohnbauten, stellt sich die Aufgabe, von aussen ankommende Leitungen, Rohre etc. in geeigneter Weise in den Keller des Gebäudes einzuführen. Bisher ist es üblich, unterhalb der Kellerdecke Leerrohrstücke für die in Betracht kommenden Installationsleitungen in der Kellermauer anzuordnen und in dieser einzubetten. Die dabei verwendeten Leerrohrstücke haben überwiegend gleichen Durchmesser und sind mehr oder weniger ungeordnet und unsystematisch in diesem Bereich des Eintritts von aussen in das Gebäude angeordnet. Die Folge davon ist, dass in der Praxis die betreffenden Leerrohrstücke nicht in einer für den betreffenden Installationsstrang erforderlichen oder erwünschten Relativstellung liegen. Weiterhin muss häufig beobachtet werden, dass die bestimmten Installationen zugeordneten Leerrohrstücke verwechselt und demnach nicht ordnungsgemäss verwendet werden. Auch ist der Einbau mit einem erheblichen Aufwand verbunden. Jedes Leerrohr muss individuell im Beton eingebettet werden. Dadurch ist die Lage der Leerrohre unbestimmt mit der Folge, dass zusätzliche und meist nicht sehr schön anzusehende Verlegearbeiten im Kellerraum erforderlich werden. Dies gilt im Grunde auch für die in eine Gebäudemauer einsetzbare Trägerplatte nach der DE-A 1 965 728, die sich gegenüber dem Mauerwerk im wesentlichen nur dadurch auszeichnet, dass sie besser bearbeitbar ist, so dass in einfacherer Weise auch später Versorgungsleitungen von aussen in das Gebäude einführbar sind. Durch die Trägerplatte sollen aufwendige Mauerdurchbrüche vermieden werden. Im übrigen handelt es sich bei der bekannten Konstruktion um ein konventionelles Einführen von Installationsleitungen in ein Gebäude. Auch sind keine Massnahmen getroffen, um die gewünschte Einbauhöhe der gut bearbeitbaren Trägerplatte, durch die die Installationsleitungen hindurchgeführt werden sollen, gegenüber dem Kellerboden exakt vorzubestimmen. Die oben erwähnten Nachverlegungsarbeiten im Kellerraum lassen sich daher auch bei Verwendung der Trägerplatte nach der DE-A 1 965 728 nicht ausschliessen.

Das gleiche gilt im wesentlichen für die Vorrichtung nach der EP-A 16 335, die jedoch für die Durchführung mehrerer Installationsleitungen und -rohre durch eine Gebäudedecke bestimmt und deren aus Quer-, Längs- und aufrechten Stützstreben vorgefertigter dreidimensionaler Tragrahmen zu diesem Zweck zwischen der Frostschürze und der Bodenplatte eines nicht unterkellerten Gebäudes eingepasst ist. Das Problem der vorherigen exakten Festlegung der Einbauhöhe des die Leerrohrabschnitte umfassenden Tragrahmens stellt sich bei der vorgeschlagenen Lösung nach der EP-A 16 335 nicht.

Der Erfindung liegt die Aufgabe zugrunde, den in der EP-A 16 335 vorgeschlagenen Tragrahmen so umzugestalten, dass er für den Einbau in eine aufrechte Kellermauer geeignet ist und seine Einbauhöhe exakt vorbestimmt werden kann. Diese Aufgabe wird erfindungsgemäss durch die kennzeichnenden Merkmale des Patentanspruches 1 gelöst.

Durch die Erfindung wird demnach eine gegebenenfalls fabrikmässig vorgefertigte Halterung zur Aufnahme von ausgewählten, zugeordneten Leerrohrabschnitten als insgesamt in eine aufrechte Mauer, nämlich Kellermauer, einbaubare Einheit geschaffen. Zu diesem Zweck ist der dreidimensionale Tragrahmen etwa quaderförmig ausgebildet. Er ist ferner mit Stützbeinen versehen, die ein exaktes Bestimmen der erwünschten Einbauhöhe des Tragrahmens gewährleisten. Die Stützbeine können sich dabei auf festem Untergrund, vorzugsweise auf der aus Beton bestehenden Kellersohle abstützen. Vorzugsweise werden die erfindungsgemäss ausgebildeten Vorrichtungen mit maximal bemessenen Stützbeinen ausgerüstet. Diese können dann an Ort und Stelle je nach den gegebenen Erfordernissen auf die notwendige Länge zurechtgeschnitten werden.

Weiterhin ist von Bedeutung die Querabmessung der Vorrichtung bzw. des Tragrahmens. Aufgrund der Querabmessungen des Tragrahmens kann aussen und/oder innen ein Mauerstein bzw. ein halber Mauerstein der genormten Grösse vorgemauert werden, so dass der Rahmen allseits in die Aussenmauer eingebettet ist.

Ein weiterer Vorschlag der Erfindung sieht eine gezielte Anordnung der Leerrohrabschnitte innerhalb des Tragrahmens vor. Diese sind in Längsrichtung der Leerrohrabschnitte gesehen vertikal und horizontal versetzt, unter Berücksichtigung der Installationsverhältnisse der hindurchzuführenden Installationsleitungen bzw. -rohre, angeordnet. Dadurch liegen die Leerrohrabschnitte von vornherein an den Stellen, an denen die Versorgungsunternehmen üblicherweise die Installationsleitungen und -rohre an das Gebäude heranführen. Im Kellerinnern sind die Sicherheitsinstrumente konzentriert, übersichtlich und platzsparend angeordnet. Unvorhergesehene Nachverlegungsarbeiten aufgrund nicht vorbestimmter Anordnung von Leerrohrabschnitten und damit entsprechend nicht vorbestimmter Anordnung von Installationsleitungen sind vermieden.

Ein Verschluss sämtlicher Leerrohrabschnitte durch entsprechende Abdeckkappen sorgt dafür, dass während des Einbaus der Vorrichtung kein Schmutz in die Leerrohrabschnitte gelangt, und darüber hinaus vorerst nicht benötigte Leerrohrabschnitte zuverlässig abgedichtet sind. Ein nachträgliches Einziehen weiterer Installationsleitungen bzw. -rohre kann nach Entfernen der Abdeckkappen jederzeit rasch erfolgen.

Ein weiterer Vorschlag der Erfindung sieht eine besondere Abdichtung und Halterung der in den Leerrohrabschnitten eingezogenen Installationsleitungen und -rohre vor. Hierzu findet ein im kellerseitigen Ende des Leerrohrabschnittes angeordneter Schutzring sowie ein Profilring, der am kelleraussenseitigen Ende des Leerrohrabschnittes angeordnet ist, Verwendung. Hierdurch wird ein äusseres Eindringen von Flüssigkeit, insbesondere Grundwasser, in das Kellerinnere verhindert.

Weitere Merkmale und Vorteile der Erfindung werden nachfolgend anhand eines in den Zeichnungen dargestellten Ausführungsbeispieles näher erläutert.

Es zeigen:

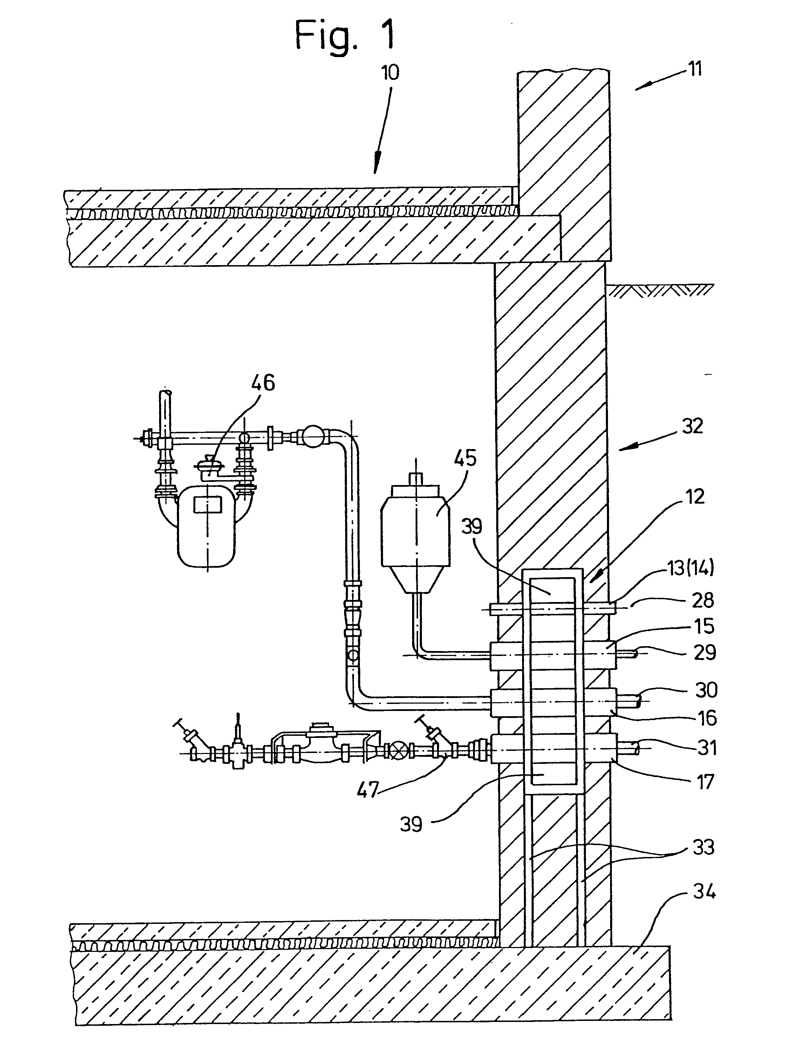

Fig. 1: einen Ausschnitt eines Gebäudes im Kellerbereich, im Vertikalschnitt, mit einem eingebauten Tragrahmen für die Aufnahme von Leerrohrabschnitten,

Fig. 2: eine Einzelheit des Tragrahmens gemäss Fig. 1 im Längsschnitt bei vergrössertem Massstab,

Fig. 3: eine Seitenansicht eines Profilringes im Vertikalschnitt,

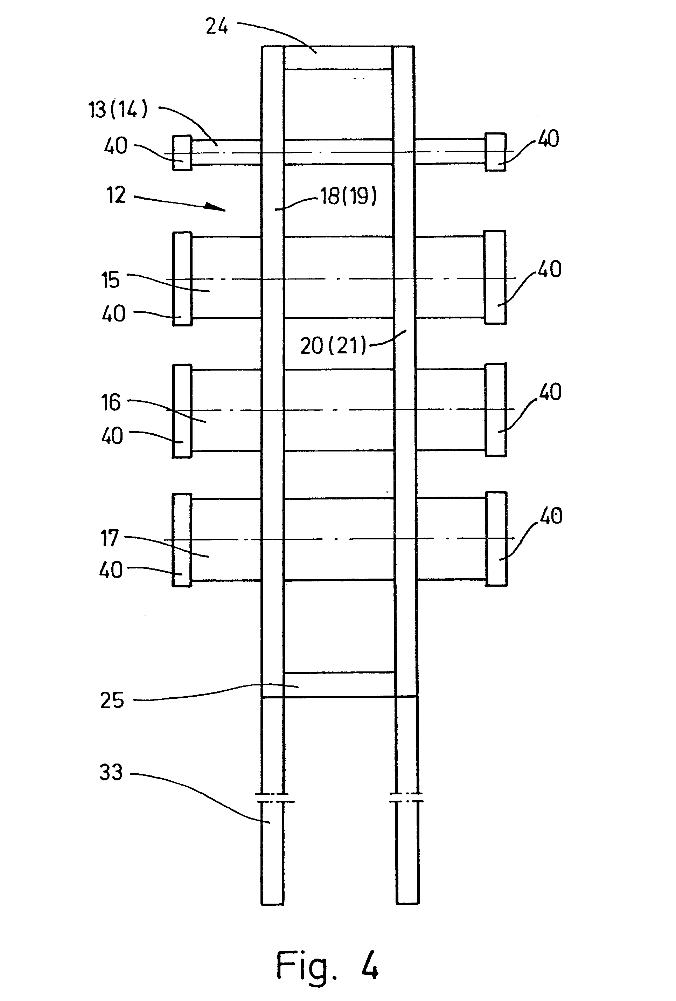

Fig. 4: eine Seitenansicht des Tragrahmens im uneingebauten Zustand,

Fig. 5: eine um 90° versetzte (Vorder-)Ansicht des Tragrahmens gemäss Fig. 4 bei geschnittenen Leerrohrabschnitten.

Für die Einführung von Installationsrohren und -leitungen in einen Keller 10 eines Gebäudes 11 dient eine als Tragrahmen 12 ausgebildete Vorrichtung zur Aufnahme einer Anzahl von Leerrohrabschnitten 13, 14, 15, 16, 17. Diese Leerrohrabschnitte, die aus Metall oder Kunststoff bestehen können, dienen zum nachträglichen Einführen einer zugeordneten Installationsleitung bzw. eines Installationsrohres mit wesentlich kleinerem Aussendurchmesser. Bis zum Einführen der Installationsrohre bzw. -leitungen sind die Enden der Leerrohrabschnitte durch Abdeckkappen 40 verschlossen.

Der Tragrahmen 12 ist im vorliegenden Fall als quaderförmiges, also dreidimensionales Tragwerk ausgebildet, und zwar mit jeweils zwei aufrechten Innenstützen 18 und 19 sowie parallelen Aussenstützen 20 und 21. Die Innenstützen 18, 19 und die Aussenstützen 20, 21 sind jeweils durch obere und untere horizontalgerichtete Querstreben 22 und 23 miteinander verbunden. Jede Innenstütze 18, 19 ist mit der benachbarten Aussenstütze 20, 21 durch obere und untere Längsstreben 24 bzw. 25 verbunden. Die Streben 22–25 liegen in gleicher (horizontaler) Ebene. Alle vorstehenden Konstruktionselemente bestehen vorzugsweise aus Winkelprofilen, die miteinander verschweisst sind.

Die Leerrohrabschnitte 13–17 erstrecken sich quer durch den Tragrahmen 12, nämlich unter Verbindung der Innen- und Aussenstützen miteinander. Die Leerrohrabschnitte 13–17 sind im wesentlichen horizontalgerichtet und mit einem Überstand auf beiden Seiten des Tragrahmens 12 angeordnet.

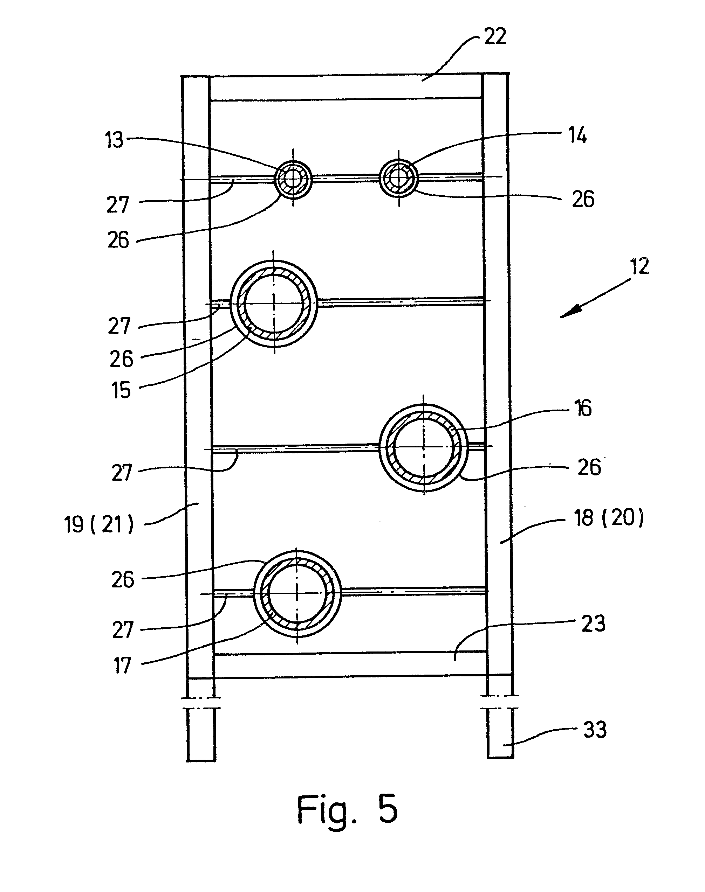

Zur festen Halterung der Leerrohrabschnitte 13–17 innerhalb des Tragrahmens 12 dienen geeignete Halterungen, im vorliegenden Fall Rohrschellen 26, die mit angesetzten Stegen 27 an die Innen- und Aussenstützen 18–21 angeschlossen sind. Die Verteilung der Leerrohrabschnitte 13–17 ist so getroffen, dass im oberen Bereich auf gleicher Ebene nebeneinanderliegend die im Durchmesser kleineren Leerrohrabschnitte 13 und 14 zur Aufnahme einer Telefonleitung 28 und einer Antennenleitung (nicht dargestellt) angeordnet sind. Mit Abstand darunter erstreckt sich der Leerrohrabschnitt 15 für die Aufnahme einer Stromzuleitung 29. Es folgt sodann der Leerrohrabschnitt 16 für eine Gasleitung 30. Ganz unten ist der Leerrohrabschnitt 17 zur Aufnahme eines Wasserrohres 31 angeordnet. Die Leerrohrabschnitte sind der Höhe nach mit gleichen Achsabständen voneinander angeordnet. Bezüglich einer in Längsrichtung der Leerrohrabschnitte 13–17 gesehenen Vertikalebene sind sie zueinander versetzt angeordnet, derart, wie in Fig. 5 dargestellt. Dadurch ist eine übersichtliche Anordnung von Sicherheitsinstrumenten (Sicherungskasten 45; Gasdruckminderer 46; Absperrorgan 47) im Inneren des Kellers 10 möglich. Als besonders vorteilhaft erweist sich die Anordnung in einer Ecke des Kellers 10, wobei die Sicherheitsinstrumente infolge der gezielten Anordnung ihrer Durchführungen im Tragrahmen 12 direkt an einer zu einer Aussenmauer 32 quergerichteten weiteren Wand befestigt werden können.

Die Querabmessungen des Tragrahmens 12 sind derart, dass dieser vollständig, also mit allseitiger Überdeckung, in der Aussenmauer 32 des Kellers 10 Aufnahme finden kann. Bei dem gezeigten Ausführungsbeispiel sind die Abmessungen in Längsrichtung der Leerrohrabschnitte derart gewählt, dass aussen und innen jeweils ein halber Mauerstein vorgemauert werden kann. Der Tragrahmen 12 ist so an die Masse des Mauerwerks angepasst. Dies gilt auch in bezug auf die Höhe des Tragrahmens 12.

An der Unterseite ist der Tragrahmen 12 bei dem gezeigten Ausführungsbeispiel mit (vier) Stützbeinen 33 versehen. Diese dienen zur Aufstützung des Tragrahmens 12 auf fester Unterlage während der Montage bzw. während des Einmauerns. Bei dem vorliegenden Ausführungsbeispiel sind die Stützbeine 33 so bemessen, dass der Tragrahmen 12 mit diesen auf einer Kellersohle 34 aus Beton abstützbar ist. Die Stützbeine 33 werden bei der Fertigung des Tragwerks so bemessen, dass sie an Ort und Stelle durch Ablängen auf die jeweils vorgegebenen Abmessungen zugeschnitten werden können.

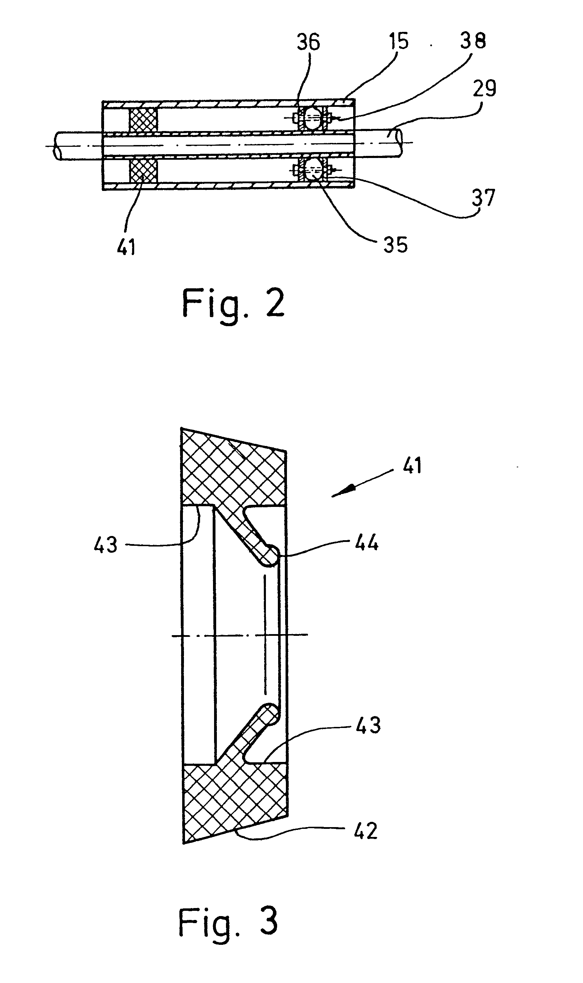

Auch die Leerrohrabschnitte 13–17 sind hinsichtlich ihrer Längsabmessung auf die Abmessungen des Bauwerks abgestellt. Es ist vorgesehen, dass die Leerrohrabschnitte 13–17 jeweils innen und aussen aus dem Mauerwerk, nämlich aus der Aussenmauer 32, herausragen. Der Überstand auf beiden Seiten kann beispielsweise 2 cm betragen. Mindestens die in den Leerrohrabschnitten 15, 16 und 17 verlaufenden Stromleitungen 29, Gasleitungen 30 und Wasserrohre 31 sind mit Abstützungen und Abdichtungen innerhalb des betreffenden Leerrohrabschnitts versehen, die gleichzeitig eine Zentrierung der Installationsleitungen und -rohre 29, 30, 31 in den Leerrohrabschnitten 15, 16, 17 herbeiführen, wie es beispielhaft in Fig. 2 gezeigt ist. Die Abstützung am zur Innenseite des Kellers 10 hin gerichteten Ende der Leerrohrabschnitte 15, 16 und 17 besteht aus einem Pressring, nämlich einem die betreffende Leitung umgebenden Spannring 35 aus elastischem Werkstoff. Dieser wird beidseitig durch Druckringe 36 und 37 beaufschlagt. Quergerichtete Schraubenbolzen 38 ermöglichen ein Spannen des Spannrings 35, nämlich ein Zusammendrücken unter elastischer Verformung, derart, dass der Dichtungsring 35 dichtend an die Innenseite des Leerrohrabschnittes und an die Aussenseite des ' betreffenden Installationsrohres (-leitung) gedrückt wird.

Eine Abstützung am zur Aussenseite des Kellers 10 hin gerichteten Ende des Leerrohrabschnittes geschieht durch einen Profilring 41 aus elastischem Werkstoff. Dieser wird in das Ende des Leerrohrabschnittes gepresst, wobei sich seine konisch verlaufende äussere Dichtfläche 42 infolge des (kleineren) Innendurchmessers des Leerrohrabschnittes elastisch verformt und an der Innenseite des Leerrohrabschnittes dichtet. Die Aussenseite eines Installationsrohres bzw. einer Installationsleitung wird durch eine diametral in einer Bohrung 43 des Profilrings 41 angeordnete Dichtlippe 44 durch elastische Verformung derselben beim Einführen eines entsprechenden Installationsrohres bzw. -leitung abgedichtet.

Der freie Innenraum innerhalb des Tragrahmens 12 ist im vorliegenden Fall durch eine Füllmasse 39 ausgefüllt. Diese dient auch zur zusätzlichen Stützung und Fixierung der Leerrohrabschnitte 13–17. Die betreffende Füllmasse 39 kann an Ort und Stelle während des Einbaus in den Tragrahmen 12 eingebracht werden. Hierfür bietet sich insbesondere Beton an. Die Füllmasse 39 kann aber auch fabrikmässig eingebracht werden beim Zusammenbau des Tragrahmens 12. In diesem Falle kommt als Füllmasse Kunststoff, insbesondere Schaumkunststoff, in Betracht.

Das in den Figuren dargestellte Ausführungsbeispiel kann mit folgenden Abmessungen ausgestattet sein:

Die Gesamtlänge jedes Leerrohrabschnittes 13–17 beträgt etwa 40 cm; die Abstände der Leerrohrabschnitte in der Höhe betragen 15 cm; die horizontalen Abstände von der Mittellinie der Leerrohrabschnitte 15, 16 und 17 zur äusseren Kante der Innenstütze 19 bzw. Aussenstütze 21 des Tragrahmens 12 betragen 8,5 cm für den Leerrohrabschnitt 15, 23,5 cm für den Leerrohrabschnitt 16 und 11,0 cm für den Leerrohrabschnitt 17; die Abmessung des Tragrahmens 12 ist mit 13 cm in der Richtung quer zur Aussenmauer 32 und mit etwa 36 cm in der Ebene der Aussenmauer (quer zu den Leerrohrabschnitten) bemessen. Die Höhe der Stützbeine 33 beträgt in Ausgangsstellung 50 cm.

**Patentansprüche**

1. Vorrichtung für die Durchführung mehrerer Installationsleitungen und -rohre durch eine Aussenmauer (32) in den Keller (10) eines unterkellerten Gebäudes (11) mittels eines vorzugsweise aus Quer- (22, 23), Längs- (24, 25) und aufrechten Stützstreben (18, 19; 20, 21) vorgefertigten dreidimensionalen Tragrahmens, in dem Leerrohrabschnitte (13, 14, 15, 16, 17) in festgelegter Relativstellung zueinander durch Halterungen wie Rohrschellen fixiert sind, dadurch gekennzeichnet, dass der Tragrahmen (12) zum Einbau in die Aussenwand (32) des Kellers (10) etwa quaderförmig ausgebildet und mit nach unten gerichteten Stützbeinen (33) zur Aufstützung auf fester Unterlage, insbesondere auf einer Kellersohle (34), versehen ist.

2. Vorrichtung nach Anspruch 1, dadurch gekennzeichnet, dass die Querabmessung des Tragrahmens (12) kleiner ist als die Dicke der Aussenmauer (32) des Kellers (10), so dass der Tragrahmen (12) allseits innerhalb der Aussenmauer (32) einbettbar ist.

3. Vorrichtung nach Anspruch 1 oder 2, dadurch gekennzeichnet, dass innerhalb des Tragrahmens (12) der Freiraum zwischen den Leerrohrabschnitten (13–17) mit einer Füllmasse (39) ausgefüllt ist, insbesondere aus Beton oder Kunststoff, z.B. Schaumkunststoff.

4. Vorrichtung nach einem der Ansprüche 1–3, dadurch gekennzeichnet, dass die Leerrohrabschnitte (13–17) im wesentlichen horizontal und parallel zueinander gerichtet durch den Tragrahmen (12) hindurchgeführt sind.

5. Vorrichtung nach einem der Ansprüche 1–4, dadurch gekennzeichnet, dass die Länge der Leerrohrabschnitte (13–17) grösser ist als die Dikke der Aussenmauer (32) des Kellers (10), derart, dass die Leerrohrabschnitte (13–17) innen und/oder aussen aus der Aussenmauer (32) herausragen.

6. Vorrichtung nach einem der Ansprüche 1–5, dadurch gekennzeichnet, dass der Leerrohrabschnitt (17) zur Aufnahme eines Wasserrohres (31) im unteren Bereich des Tragrahmens (12) befestigt ist, darüber der Leerrohrabschnitt (16) zur Aufnahme einer Gasleitung (30) liegt, darüber der Leerrohrabschnitt (15) zur Aufnahme einer Stromzuleitung (29) liegt und die Leerrohrabschnitte (13, 14) zur Aufnahme einer Telefonleitung (28) sowie eines weiteren Kabels, z.B. eines Antennenkabels, nebeneinanderliegend über den übrigen Leerrohrabschnitten (15, 16, 17) liegen, und die Leerrohrabschnitte (15, 16, 17) bezüglich einer sich in Längsrichtung desselben erstrekkenden Vertikalebene versetzt angeordnet sind.

7. Vorrichtung nach einem der Ansprüche 1–6, dadurch gekennzeichnet, dass die Leerrohrabschnitte (13, 14, 15, 16, 17) bis zur Montage der Installationsleitungen und -rohre bzw., wenn keine Installationsleitungen oder -rohre eingezogen sind, an ihren Enden durch jeweils eine auf den betreffenden Durchmesser des Leerrohrabschnittes (13, 14, 15, 16, 17) abgestimmte Abdeckkappe (40) gegen Eindringen von Flüssigkeit, insbesondere Grundwasser, abgedichtet sind.

8. Vorrichtung nach einem der Ansprüche 1–7, dadurch gekennzeichnet, dass die Installationsleitungen und -rohre (28, 29, 30, 31) in den mit grösserem Innendurchmesser als die mit Installationsrohren und -leitungen versehenen Leerrohrabschnitte (13, 14, 15, 16, 17) gegenüber diesen durch zwei in axialem Abstand angeordnete Dichtringe, nämlich einem Spannring (35) und einem Profilring (41), abgedichtet und in etwa zentrisch gehalten sind.

9. Vorrichtung nach Anspruch 8, dadurch gekennzeichnet, dass der Spannring (35) aus elastisch verformbarem Werkstoff, insbesondere Gummi, hergestellt ist und durch zwei an beiden Seiten des Spannringes (35) axial gegenüberliegend angeordnete, durch quergerichtete Schraubenbolzen (38) zusammendrückbare Druckringe (36, 37) elastisch verformbar ist.

10. Vorrichtung nach Anspruch 8 oder 9, dadurch gekennzeichnet, dass der Profilring (41) aus elastisch verformbarem Werkstoff, insbesondere Gummi, hergestellt ist und eine geneigt zu seiner Mittellinie verlaufende äussere Dichtfläche (42) sowie eine in einer Bohrung (43) diametral umlaufende Dichtlippe (44) aufweist.

11. Vorrichtung nach einem der Ansprüche 1–10, dadurch gekennzeichnet, dass der Tragrahmen (12) in Richtung quer zum Mauerwerk, d.h. zur Aussenmauer (32), eine Abmessung von etwa 13 cm aufweist, die Gesamtlänge der Leerrohrabschnitte (13–17) etwa 40 cm, der Achsabstand desselben in der Höhe etwa 15 cm und der horizontale Abstand zwischen den Mittellinien der Leerrohrabschnitte (15, 16, 17) und einer äusseren Kante der inneren Stützstrebe (19) bzw. der äusseren Stützstrebe (21) des Tragrahmens (12) etwa 8,5 cm beim Leerrohrabschnitt (15), 23,5 cm beim Leerrohrabschnitt (16) und 11 cm beim Leerrohrabschnitt (17) beträgt.

## Claims

1. Apparatus for passing a plurality of installation lines and pipes through an outer wall (32) into the cellar (10) of a cellared building (11) by means of a three-dimensional supporting frame preferably prefabricated from transverse (22, 23), longitudinal (24, 25) and upright supporting struts (18, 19, 20, 21), in which hollow pipe sections (13, 14, 15, 16, 17) are fixed relative to one another in determined positions by mounting supports, such as pipe clips, characterized in that, the supporting frame (12) for fitting in the outer wall (32) of the cellar (10) has an approximately parallelepipedic construction and is provided with downwardly directed support legs (33) for supporting on a firm substrate, particularly on a cellar floor (34).

2. Apparatus according to claim 1, characterized in that, the transverse dimension of the supporting frame (12) is smaller than the thickness of the outer wall (32) of cellar (10), so that the supporting frame (12) can be embedded on all sides within the outer wall (32).

3. Apparatus according to claims 1 or 2, characterized in that, within the supporting frame (12), the free space between the hollow pipe sections (13, 17) is filled with a filling material (39), particularly concrete or plastic, e.g. plastic foam.

4. Apparatus according to one of the claims 1 to 3, characterized in that, the hollow pipe sections (13 to 17) pass through the supporting frame (12) so as to be substantially horizontal and parallel to one another.

5. Apparatus according to one of the claims 1 to 4, characterized in that, the length of the hollow pipe sections (13 to 17) is greater than the thickness of the outer wall (32) of cellar (10), so that the hollow pipe sections (13 to 17) project inwards and/or outwards from outer wall (32).

6. Apparatus according to one of the claims 1 to 5, characterized in that, the hollow pipe section (17) is fixed within the lower area of supporting frame (12) for receiving a water pipe (31), above it is positioned the hollow pipe section (16) for receiving a gas main (30), above it the hollow pipe section (15) for receiving a current lead (29), as well as the hollow pipe sections (13, 14) for receiving a telephone line (28) and a further cable, e.g. an antenna cable, are arranged in juxtaposed manner over the other hollow pipe sections (15, 16, 17), the latter being staggered with respect to a vertical plane extending in the longitudinal direction thereof.

7. Apparatus according to one of the claims 1 to 6, characterized in that, the hollow pipe sections (13, 14, 15, 16, 17) up to the time of fitting the installation pipes and lines or if no installation pipes or lines are inserted have their ends sealed against the penetration of liquid, particularly ground water, by a cap (40) matched to the diameter of the hollow pipe section (13, 14, 15, 16, 17).

8. Apparatus according to one of the claims 1 to 7, characterized in that, the installation lines and pipes (28, 29, 30, 31) in the hollow pipe sections (13 to 17) having a larger internal diameter than those provided with installation pipes and lines are sealed with respect thereto by two axially spaced gaskets, namely a locking ring (35) and a profile ring (41) and are held approximately centrally.

9. Apparatus according to claim 8, characterized in that the locking ring (35) is made from an elastically deformable material, particularly rubber, and is elastically deformable by two thrust rings (36, 37) arranged in axially facing manner on either side of locking ring (35) and compressible by transversely directed bolts (38).

10. Apparatus according to claims 8 or 9, characterized in that the profile ring (41) is made from elastically deformable material, particularly rubber, and has an outer sealing surface (42) sloping with respect to its axis, as well as a sealing lip (44) extending around in diametral manner in a bore (43).

11. Apparatus according to one of the claims 1 to 10, characterized in that, the supporting frame (12) has a size of approximately 13 cm in the direction at right angles to the brickwork, i.e. to outer wall (32), the overall length of the hollow pipe sections (13 to 17) is approximately 40 cm, the centre distance thereof vertically is approximately 15 cm and the horizontal spacing between the axes of the hollow pipe sections (15, 16, 17) and an outer edge of the inner supporting strut (19) or outer supporting strut (21) of supporting frame (12) is approximately 8.5 cm at hollow pipe section (15), 23.5 cm at hollow pipe section (16) and 11 cm at hollow pipe section (17).

**Revendications**

1. Dispositif pour le passage de plusieurs conduites et tubes d'installation à travers un mur extérieur (32) dans la cave, ou sous-sol, (10) d'un bâtiment à sous-sol (11) au moyen d'un cadre porteur tridimensionnel, de préférence préfabriqué à partir d'entretoises transversales (22, 23), longitudinales (24, 25) et verticales (18, 19, 20, 21), dans lequel sont fixés des morceaux de tubes vides (13, 14, 15, 16, 17) en position relative fixe les uns par rapport aux autres, grâce à des pièces de maintien telles que des colliers de tubes, caractérisé par le fait que le cadre porteur (12) est de forme sensiblement quadrangulaire pour être installé dans la paroi extérieure (32) de la cave (10) et est munie de jambes d'appui (33) dirigées vers le bas pour servir d'appui sur une assise fixe, en particulier sur un sol de cave (34).

2. Dispositif selon la revendication 1, caractérisé par le fait que la dimension transversale du cadre porteur (12) est plus petite que l'épaisseur du mur extérieur (32) de la cave (10) de sorte que le cadre (12) peut être encastré, ou noyé, totalement à l'intérieur du mur extérieur (32).

3. Dispositif selon la revendication 1 ou 2, caractérisé par le fait que, à l'intérieur du cadre porteur (12), l'espace libre entre les morceaux de tubes vides (13 à 17) est rempli par une masse de remplissage (39), en particulier par du béton ou de la matière plastique, par exemple de la matière plastique alvéolaire.

4. Dispositif selon l'une des revendications 1 à 3, caractérisé par le fait que les morceaux de tubes vides (13 à 17) sont amenés à passer à travers le cadre porteur (12) en étant dirigés sensiblement horizontalement et parallèlement les uns aux autres.

5. Dispositif selon l'une des revendications 1 à 4, caractérisé par le fait que la longueur des morceaux de tubes vides (13, 17) est supérieure à l'épaisseur du mur extérieur (32) de la cave (10) de sorte que les morceaux de tubes vides (13, 17) font saillie vers l'intérieur et/ou vers l'extérieur du mur extérieur (32).

6. Dispositif selon l'une des revendications 1 à 5, caractérisé par le fait que le morceau de tube vide (17) pour recevoir une conduite d'eau (31) est fixée dans la zone inférieure du cadre porteur (12), au-dessus se trouve le morceau de tube vide (16) pour recevoir une conduite de gaz (30), au-dessus encore se trouve le morceau de tube (15) pour recevoir une canalisation électrique (39) et les morceaux de tubes vides (13, 14) pour recevoir une ligne téléphonique (28) ainsi qu'un autre câble, par exemple un câble d'antenne, sont disposée côte à côte au-dessus des autres morceaux de tubes vides (15, 16, 17), et les morceaux de tubes vides (15, 16, 17) sont disposés en étant décalés par rapport à un plan vertical s'étendant dans la direction longitudinale de ceux-ci.

7. Dispositif selon les revendications 1 à 6, caractérisé par le fait que les morceaux de tubes vides (13, 14, 15, 16, 17), jusqu'au montage des conduites et tubes d'installation ou lorsque n'ont été introduites aucune canalisation ou tube d'installation, sont rendus étanches à l'entrée de liquide, en particulier d'eau souterraine par un chapeau de recouvrement (40) s'accordant au diamètre correspondant du morceau de tube vide (13, 14, 15, 16, 17).

8. Dispositif selon l'une des revendications 1 à 7, caractérisé par le fait que les conduites et canalisations d'installation (28, 29, 30, 31), dans les morceaux de tubes vides (13, 14, 15, 16, 17) qui avec des diamètres plus grands sont munis des conduites et tubes d'installation, sont rendus étanche par rapport à ces tubes vides grâce à deux bagues d'étanchéité disposées à distance axiale l'une de l'autre, à savoir une bague de serrage (35) et une bague profilée (41) et y sont maintenus sensiblement centrés.

9. Dispositif selon la revendication 8, caractérisé par le fait que la bague de serrage (35) est en matière déformable élastiquement, en particulier en caoutchouc, et elle est déformable élastiquement grâce à deux bagues de pression (36, 37) comprimable l'une par rapport à l'autre au moyen de boulons transversaux (38) et qui sont disposées en se faisant face axialement des deux côtés de la bague de serrage (38).

10. Dispositif selon la revendication 8 ou 9, caractérisé par le fait que la bague profilée (41) est en matière déformable élastiquement, en particulier en caoutchouc, et possède une surface d'étanchéité extérieure (42) inclinée par rapport à son axe, ainsi qu'une lèvre d'étanchéité (44) faisant le tour diamétralement dans un alésage (43).

11. Dispositif selon l'une des revendications 1 à 10, caractérisé par le fait que le cadre porteur (12) possède, en direction transversale par rapport à la maçonnerie, c'est-à-dire au mur extérieur (32), une dimension d'environ 13 cm, la longueur totale des morceaux de tubes vides (13, 17) est d'environ 40 cm, l'écart axial de ceux-ci en hauteur d'environ 15 cm et l'écart horizontal entre les axes des morceaux de tubes vides (15, 16, 17) et un bord extérieur des pièces d'appui extérieures (21) du cadre porteur (12) est d'environ 8,5 cm pour le morceau de tube vide (15), de 23,5 cm pour le morceau de tube vide (16) et de 11 cm pour le morceau de tube vide (17).

# Fig. 1

36  15  38
29

41

35

37

## Fig. 2

41

43  44

43

42

## Fig. 3

Fig. 4

Fig. 5